# EUROPEAN PATENT SPECIFICATION

(11) **EP 1 146 146 B1**
(45) Date of publication and mention of the grant of the patent: **29.10.2003**
(21) Application number: 01116922.4
(22) Date of filing: 30.08.1995
(51) Int. Cl.: C25C 3/08

(54) **Horizontal drained cathode surface with recessed grooves for aluminium electrowinning**
Mit versenkten Nuten drainierte horizontale Kathodenoberfläche für die Aluminium Elektrogewinnung
Cathode drainée pour la production électrolytique d'aluminium présentant des rainures en tranchée sur sa surface horizontale

(30) Priority: 08.09.1994 US 302178
(43) Date of publication of application: 17.10.2001
(62) Divisional of application: 98117608.4
(73) Proprietor: MOLTECH Invent S.A., 1520 Luxembourg (LU)
(72) Inventor: De Nora, Vittorio, Nassau (BS)
(74) Representative: Cronin, Brian

(56) References cited:
- WO-A-92/03597

## Description

### Field of the Invention

The present invention concerns a cathode bottom of an aluminium production cell for the electrowinning of aluminium which has a horizontal drained cathode surface with a series of recessed grooves for the collection of product aluminium.

### Background of the Invention

The technology for the production of aluminium by the electrolysis of alumina, dissolved in molten cryolite containing salts, at temperatures around 950°C is more than one hundred years old.

This process, conceived almost simultaneously by Hall and Héroult, has not evolved as much as other electrochemical processes, despite the tremendous growth in the total production of aluminium that in fifty years has increased almost one hundred fold. The process and the cell design have not undergone any great change or improvement and carbonaceous materials are still used as electrodes and cell linings.

The electrolytic cell trough is typically made of a steel shell provided with an insulating lining of refractory material covered by prebaked anthracite-graphite or all graphite carbon blocks at the wall and at the cell floor bottom which acts as cathode and to which the negative pole of a direct curlas of steel conductor bars embedded in the carbon blocks.

The anodes are still made of carbonaceous material and must be replaced every few weeks. The operating temperature is still approximately 950°C in order to have a sufficiently high rate of dissolution of alumina which decreases at lower temperatures and to have a higher conductivity of the electrolyte.

The carbonaceous materials used in Hall-Héroult cells as cell lining deteriorate under the existing adverse operating conditions and limit the cell life.

The anodes have a very short life because during electrolysis the oxygen which should evolve on the anode surface combines with the carbon to form CO₂ and small amounts of CO. The actual consumption of the anode is approximately 450 kg/ton of aluminium produced which is more than 1/3 higher than the theoretical amount.

The carbon lining of the cathode bottom has a useful life of a few years after which the operation of the entire cell must be stopped and the cell relined at great cost. Despite an aluminium pool having a thickness of 15 to 20 cm maintained over the cathode, the deterioration of the cathode carbon blocks cannot be avoided because of penetration of sodium into the carbon which by chemical reaction and intercalation causes swelling, deformation and disintegration of the cathode carbon blocks, as well as penetration of cryolite and liquid aluminium.

The carbon blocks of the cell side wall do not resist oxidation and attack by cryolite and a layer of solidified cryolite has to be maintained on the cell side walls to protect them. In addition, when cells are rebuilt, there are problems of disposal of the carbon cathodes which contain toxic compounds including cyanides.

Another major drawback, however, is due to the fact that irregular electromagnetic forces create waves in the molten aluminium pool and the anode-cathode distance (ACD), also called interelectrode gap (IEG), must be kept at a safe minimum value of approximately 50 mm to avoid short circuiting between the aluminium cathode and the anode or reoxidation of the metal by contact with the CO₂ gas formed at the anode surface.

The high electrical resistivity of the electrolyte, which is about 0.4 ohm. cm., causes a voltage drop which alone represents more than 40% of the total voltage drop with a resulting energy efficiency which reaches only 25% in the most modern cells. The high cost of energy together with the low efficiency, has become an even bigger item in the total manufacturing cost of aluminium since the oil crisis, and has decreased the rate of growth of this important metal.

In the second largest electrochemical industry following aluminium, namely the caustic and chlorine industry, the invention of the dimensionally stable anodes (DSA®) based on noble metal activated titanium metal, which were developed around 1970, permitted a revolutionary progress in the chlorine cell technology resulting in a substantial increase in cell energy efficiency, in cell life and in chlorine-caustic purity. The substitution of graphite anodes with DSA® increased drastically the life of the anodes and reduced substantially the cost of operating the cells. Rapid growth of the chlorine caustic industry was retarded only by ecological concerns.

In the case of aluminium production, pollution is not due to the aluminium produced, but to the materials and the manufacturing processes used and to the cell design and operation.

However, progress has been reported in the operation of modern aluminium plants which utilize cells where the gases emanating from the cells are in large part collected and adequately scrubbed and where the emission of highly polluting gases during the manufacture of the carbon anodes and cathodes is carefully controlled.

While progress has been reported in the fabrication of carbon cathodes by the application of coatings or layers using new aluminium wettable materials which are also a barrier to sodium penetration during electrolysis, no progress has been achieved in design of cathodes for aluminium production cells with a view to restraining movement of the molten aluminium in order to reduce the interelectrode gap and the rate of wear of its surface.

U.S. Patent 4,560,488 (Sane et al) discloses a recent development in molten salt electrolysis cells concerning making materials wettable by molten aluminium. However, the carbon or graphite anodes and cathodes are of conventional design with no suggestion leading to the present invention.

U.S. Patent 4,681,671 (Duruz) illustrates another improvement in molten salt electrolysis wherein operation at lower than usual temperatures is carried out utilizing permanent anodes, e.g. metal, alloy, ceramic or a metal-ceramic composite as disclosed in European Patent Application No. 0030834 and U.S. Patent 4,397,729.

U.S. Patent 5,203,971 (de Nora et al) discloses an aluminium electrowinning cell having a partly refractory and partly carbon based cell lining. The carbon-based part of the cell bottom may be recessed in respect to the refractory part, which assists in reducing movement of the aluminium pool.

US Patent 3,856,650 (Kugler) proposed lining a carbon cell bottom with a ceramic coating upon which parallel rows of tiles are placed, in the molten aluminium, in a grating-like arrangement in an attempt to reduce wear due to movements of the aluminium pool.

WO92/03597 (Juric et al.) discloses an aluminium production cell having a horizontal drained cathode surface, a central aluminium collection channel and longitudinal and transverse recessed grooves for facilitating collection of product aluminium from the drained cathode surface and discharging the aluminium into the central collection channel.

The following references disclose several other improvements in cell operation.
European Patent Application No. 0308015 (de Nora) discloses a novel current collector;
European Patent Application No. 0308013 (de Nora) deals with a novel composite cell bottom; and
European Patent Application No. 0132031 (Dewing) provides a novel cell lining.

While the foregoing references indicate continued efforts to improve the operation of molten cell electrolysis operations, none suggest the invention.

### Summary of the Invention

The invention concerns a cathode bottom of a cell for the electrowinning of aluminium from alumina, comprising a horizontal aluminium-wettable drained cathode surface having a series of parallel spaced apart recessed grooves extending across the cathode bottom for facilitating collection of product aluminium draining from the horizontal cathode surface. The cathode bottom comprises a series of cathode blocks placed side-by-side along the cathode bottom, for example with ramming paste as in conventional cells or, preferably, by glue. Each cathode block extends lengthwise across (transversally of) the cathode bottom. The cathode blocks have flat top surfaces that form said horizontal aluminium-wettable drained cathode surface and cut-outs or bevels along opposite upper side edges that extend across the cathode bottom so that two cathode blocks placed side-by-side along their cut-outs or bevels form between them one of said recessed grooves across the cathode bottom.

Usually, the recessed grooves have a generally U-shaped or V-shaped cross-section.

The cathode blocks may comprise at least one further recessed groove between and parallel to the recessed grooves across the cathode bottom.

These recessed grooves may lead into at least one aluminium collection channel arranged longitudinally along the cathode bottom for draining off the molten aluminium, and preferably having means for maintaining a constant level of aluminium in these recessed grooves. At least one longitudinal aluminium collection channel can be a deep central channel. At least one longitudinal aluminium collection channel may extend along a side of the cathode bottom. The cathode blocks may have further cut-outs or bevels along top end edges to form at least one longitudinal aluminium collection channel. A plurality of these longitudinal aluminium collection channels may run across the horizontal top surface of at least one of the cathode blocks.

Each cathode block can extend across substantially the entire cathode bottom. Alternatively, several cathode blocks arranged end-to-end extend across substantially the entire cathode bottom.

In the illustrated embodiments, the cathode blocks are provided with a steel or other conductive bar for the delivery of current. These conductive bars are generally parallel to one another and extend across (transversally of) the cathode bottom.

During use a series of anodes are suspended facing a layer of molten aluminium atop the top surfaces of the cathode blocks.

In use, the above channels or grooves are covered by the layer of molten aluminium and facilitate the collection/evacuation of aluminium, which substantially improves cell operation and extends cell life.

In the illustrated embodiments, the cathode blocks are made of carbon. The surfaces of the blocks making up the cathode bottom are most preferably coated with a layer of aluminium-wettable refractory material, advantageously a particulate refractory hard metal boride applied from a slurry containing colloid, for example as disclosed in WO93/25731 (Sekhar et al).

The surfaces of the blocks making up the cathode cell bottom may be covered by a layer of molten aluminium forming a drained cathode surface, the channels or grooves forming a canal serving to guide the flow of aluminium across the cell. In this drained configuration, the channels or grooves are partly filled with molten aluminium and the electrolysis takes place between the aluminium-wetted cathode and the facing anode surface. As explained below, an arrangement will be provided for removing aluminium from the sides of the cell.

Furthermore, in such a drained configuration, the inter-electrode distance can be reduced with a concomitant reduction of cell voltage and an increase in energy efficiency.

The grooves and channels are so configured and arranged, in particular as regards their depth and the shape and angle of their walls, that the molten aluminium contained in the channels is restrained from movement in the longitudinal direction of the cell. The aluminium can flow along the grooves and channel(s) into a collection channel.

An advantage obtained with the channelled cell bottom is that its life is extended in comparison with other electrolytic aluminium production cells. Moreover, the channelled cathode improves the uniformity of the current distribution and increases the current efficiency. Additionally, sludge can accumulate in the grooves or channels without disturbing the current distribution and the grooves or channels can serve to eliminate sludge which collects in the grooves or channels but is flushed out with the molten aluminium.

In most embodiments, the width of the channels or grooves is at least as great as their depth. These channels or grooves can have a rectangular, trapezoidal, V-shaped, curved (i.e. concave at least in their bottom part) or an asymmetric cross-section designed to permit the evacuation and collection of aluminium when the cell operates in a drained cell configuration, or designed to act as a barrier to aluminium movement to reduce or eliminate turbulent aluminium pool movement in a pool configuration.

As stated above, there may be at least one longitudinal channel which extends along the cell and intersects with the parallel (transverse) recessed cross grooves. These longitudinal channels of suitable dimensions serve for the removal of the molten aluminium to an aluminium reservoir.

As mentioned above, the recessed cross grooves may lead into at least one longitudinal channel for collecting the molten aluminium, and preferably having means such as a weir for maintaining a constant level of aluminium in the transversally-extending channels or groove. This aluminium collection channel may extend along one or both sides of the cell, or could be a deep central channel machined in the cathode blocks.

Preferably, the surfaces of carbon blocks making up the cathode cell bottom are treated to reduce sodium penetration, for example as described in WO 94/20650 or in WO 94/24337, or are coated with a layer which reduces sodium penetration, for example a refractory hard metal boride applied from a slurry containing colloid as disclosed in WO 93/25731 (all in the name of Sekhar et al).

In general, the carbon cathode blocks are made resistant to chemical attack and to mechanical attack. The surfaces of the carbon blocks making up the channelled cathode cell bottom can also be coated with a layer which prior to use or in use becomes harder than the carbon cathode block and thereby protects the surface against abrasive wear by limited movement of the molten aluminium. Moreover, the hardened cathode surface remains dimensionally stable whereas a facing carbon anode may erode and conform to the shape of the cathode. This surface-hardening effect can be achieved with the aforementioned refractory boride or other aluminium wettable refractory layers which provide an essentially dimensionally stable surface.

In this way, the cathode cell bottom can remain dimensionally stable during electrolysis, and because of this, it is both possible and advantageous to provide channels in the tops of the carbon cathode blocks because these channelled blocks will remain dimensionally stable during cell operation.

The cell incorporating the channelled cell bottom can employ conventional carbon anodes which wear in the normal way for the pool configuration but whose shape adapts to the channelled cathode. Specially-shaped carbon anodes designed to cooperate with the channelled cathode design, and in particular to facilitate gas release at the anode while assisting drainage of molten aluminium at the cathode can also be used. Dimensionally stable anodes can also be employed.

One method of fabricating an electrolytic cell according to the invention comprises providing the channels in cathode blocks before or after assembling the blocks to form the channelled cathode cell bottom. The grooves or channels are possibly machined in carbon cathode blocks, for example using a milling cutter. For some shapes, especially with bevels, it may, however, be convenient to provide the grooves or channels by extrusion. If the blocks include bevels or cut-outs along their edges, when the adjacent blocks are brought together, the bevels or cut-outs between the assembled adjacent blocks form grooves or channels.

Machining operations such as milling/cutting in particular are simple to execute to provide a series of parallel channels or grooves of any desired shape in the carbon blocks.

When the blocks are assembled side-by-side, gaps can be left between the adjacent blocks, which gaps are filled with an anthracite-based or other usual ramming paste. Preferably, however, the blocks will be assembled using a glue, as is known for bonding together carbon cathode blocks with no or only a very small gap, such as a resin-based glue, or an inorganic glue as disclosed in WO94/20651 (Sekhar). Either way, the assembled blocks form a continuous cell bottom in the same manner as in conventional cells, apart from the fact that the surface of the cell bottom is channelled.

Before or after assembly, carbon blocks may be treated to make them resistant to chemical and mechanical attack. Before start up of the cell for producing aluminium, the channelled cell bottom is preferably treated to harden the surface of the cathode blocks and render the surface wettable by molten aluminium, whereby in use the cathode blocks remain dimensionally stable and are wetted by molten aluminium.

The invention also relates to a cathode block for the electrowinning of aluminium from alumina, ready to be installed in a cell.

In the illustrated embodiments, the blocks comprise a bottom surface having therealong a longitudinally extending groove or like recess generally parallel to the block's top and side surfaces, for receiving a steel or other conductive bar for the delivery of current.

According to the invention, the cathode block has a flat horizontal aluminium-wettable top surface for forming a horizontal aluminium-wettable drained cathode surface of a cathode bottom and at least one edge of the top surface of the cathode block is provided with at least one bevel or cut-out, or a part of the top surface is inclined, so that when two cathode blocks are placed side-by-side along their cut-outs or bevels or inclined part of their top surfaces a recessed groove is formed between them for facilitating collection of product aluminium draining from the horizontal cathode surface. This bevel, cut-out or inclined part extends along the top surface of the cathode block.

These cathode blocks can incorporate all of the features described in relation to the complete cell cathode bottom.

Another aspect of the invention relates to a cathode bottom for the electrowinning of aluminium from alumina. The cathode bottom comprises a plurality of the above cathode blocks placed side-by-side along their cut-outs or bevels so that the top cathode surfaces of the side-by-side blocks form a horizontal aluminium-wettable drained cathode surface and the cut-outs or bevels of the cathode blocks form recessed groove(s) between the cathode blocks.

A further aspect of the invention relates to a cell for the electrowinning of aluminium from alumina, comprising a cathode bottom as described above.

As mentioned above, the cell may comprise dimensionally stable anodes or carbon anodes.

Yet another aspect of the invention relates to a method of producing aluminium which comprises passing an electrolysis current in a molten electrolyte containing dissolved alumina between an anode and a horizontal aluminium-wettable drained cathode surface of a cathode bottom as described above to evolve gas on the anode and produce on the drained cathode surface molten aluminium which drains into the recessed grooves of the drained cathode surface.

### Description of the Drawings

Reference is now made to the drawings wherein:
- Figure 1 schematically shows part of a cell bottom formed of three cathode blocks provided with parallel recessed grooves in accordance with the invention, this schematic view being in longitudinal cross-section and side elevation of the cell;
- Figure 2 schematically shows three different comparative cathode blocks of cathode bottoms provided with parallel channels of different shapes; and
- Figure 3 is a view of an electrolytic cell according to the invention.

### Detailed Description of the Invention

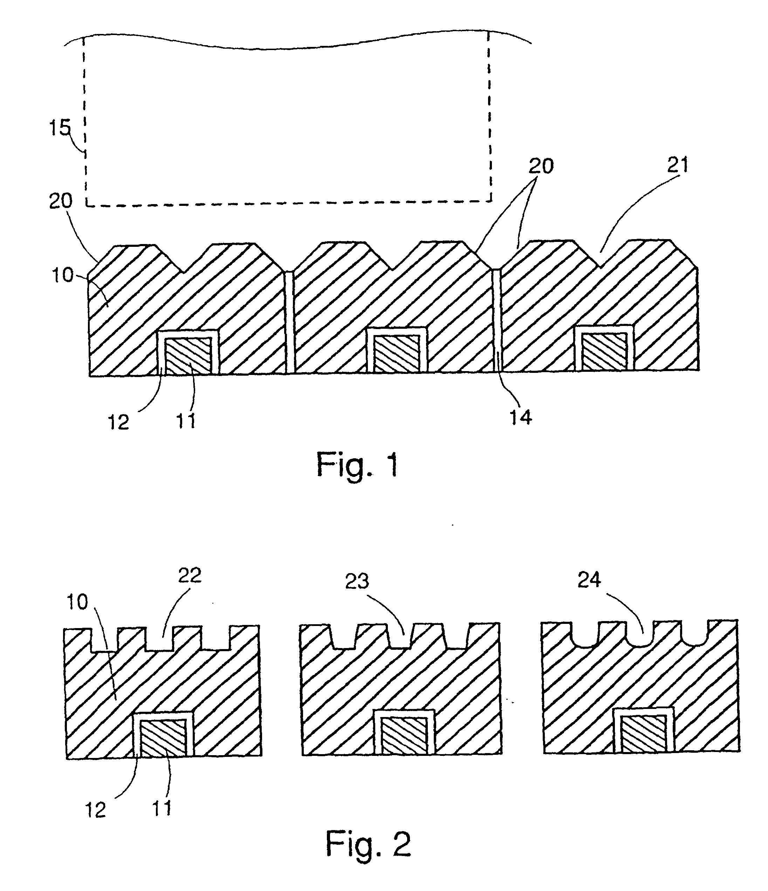

Figure 1 schematically shows part of a cell bottom formed of an assembly of channelled cathode blocks 10 according to the invention, three such blocks being shown. The blocks 10 are generally rectangular and made of carbon in the form of anthracite or graphite of the normal grade used for aluminium production cathodes. In their lower face, the blocks 10 have a recess 12 receiving a steel conductor bar 11 which is connected in the blocks by an electrically conductive bonding material for example cast iron. These steel conductor bars 11 extend externally to a negative bus bar of the cell.

The rectangular cathode blocks 10 have a flat top surface (which will form the horizontal aluminium-wettable drained cathode surface) side surfaces (which will be joined together) and a bottom surface in which the recess 12 is provided in the form of a rectangular groove whose faces are parallel to the block's top and side surfaces. Usually, the recess 12 extends all the way along the blocks' bottom surface.

In accordance with the invention, the side edges 20 of the block's top surfaces are bevelled. Additionally, in the middle of the blocks' upper surfaces, generally V-shaped grooves 21 are machined. When two blocks 10 are brought together, the adjacent bevelled edges 20 form also a V-shaped groove similar in shape and size, and parallel to, the grooves 21.

The adjacent blocks 10 are joined side-by-side by ramming paste 14, for example an anthracite-based paste, to form a continuous carbon cell bottom. Usually one block 10 extends over substantially the entire width of the cell. If this is not so, several blocks 10 are arranged end-to-end across the cell, i.e. along the direction of the conductor bars 11, and may also be joined by ramming paste. Instead of using ramming paste, the blocks can advantageously be bonded by a resin-based glue, in which case the gap between the adjacent blocks would be much smaller.

When the blocks 10 are joined side-by-side to form a cell bottom, the conductive bars 11 extend across the cell and protrude from both sides of the cell (or alternate conductor bars protrude from opposite sides) for connection to the current supply.

An anode 15, seen in side view, is diagrammatically indicated in a dashed line. In use, the grooves 20, 21 are partly filled with molten aluminium, as will be described in detail later.

Figure 2 shows three comparative channelled carbon blocks 10 but with grooves or channels of different shapes, which blocks can be assembled into a cell bottom using glue or ramming paste. A first block has a parallel series of generally rectangular grooves 22 which are slightly wider than deep. Usually, the width of the grooves 22 is at least as great as their depth. The second block has generally trapezoidal grooves 23, and the third block has U-shaped grooves 24 of rounded cross-section, these shapes being given by way of example among many possible shapes.

As mentioned above bevels or cut-outs can be provided along side edges of top surfaces of the blocks 10 so that when two blocks 10 are brought together, the adjacent bevelled edges form also recessed grooves 20 in accordance with the invention parallel to the grooves 22, 23 and 24 in the top surface of the cathode blocks 10.

In all cases, the bevels 20 and grooves 21, 22, 23, 24 extend along the top surface of the cathode block parallel to the groove 12 receiving the conductor bar 11. All of the described bevels 20 and grooves 21, 22, 23, 24 can easily be machined in the blocks 10, for instance using a milling cutter. Alternatively, it is possible to provide grooves or bevels or other forms of channel by other methods, for example by extrusion.

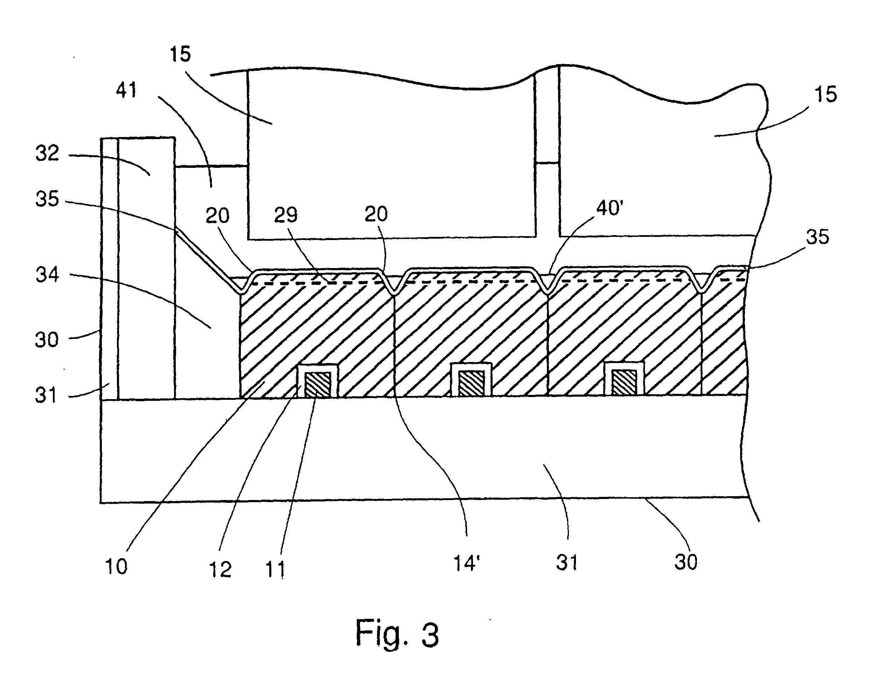

Figure 3 shows part of a cell according to the invention. The cathode blocks 10 have bevelled upper side edges 20 and may be bevelled also along their top end edges, as indicated in dotted lined at 29. The bevelled side edges 20 of the adjacent blocks form V or U-shaped recessed grooves running along the blocks 10, there being a similar V or U-shaped recessed grooves formed between the bevelled edge of the endmost block 10 and the adjacent mass of ramming paste 34. The main recessed grooves formed by the bevels 20 extend parallel to the conductor bars 11, i.e. across the cell, and the longitudinal channels formed by bevels 29 extend along the cell.

These recessed grooves formed by the bevelled edges 20 have the advantage of equalizing the current distribution in the carbon blocks 10 from the centrally located current distribution bar in the block's lower surface. This may in particular make it possible to reduce the height of the carbon blocks 10, leading to a saving in carbon which reduces the amount of toxic carbon that has to be disposed of when the carbon potlining is reconstructed.

In Figure 3, the adjacent blocks 10 are shown as being bonded together by a glue 14', so there is essentially no gap between them. As shown, the surface of the carbon cathode blocks 10 can be made dimensionally stable by applying an aluminium-wettable refractory coating 35 of an aluminium-wettable refractory hard metal (RHM) having little or no solubility in aluminium and having good resistance to attack by molten cryolite. The coating 35 covers the entire upper surfaces of blocks 10 with bevels 20, 29 and the glued joints 14', and also extends over the adjacent mass of ramming paste 34.

Useful RHM for coating 35 include borides of titanium, zirconium, tantalum, chromium, nickel, cobalt, iron, niobium and/or vanadium. Useful cathode materials are carbonaceous materials such as anthracite or graphite. The coating 35 may be in the form of a particulate refractory hard metal boride in a colloid applied from a slurry of the particulate refractory hard metal boride in a colloid carrier, wherein the colloid comprises at least one of colloidal alumina, silica, yttria, ceria, thoria, zirconia, magnesia, lithia, monoaluminium phosphate or cerium acetate. The colloidal carrier has been found to considerably improve the properties of the coating produced by non-reactive sintering. WO 93/25731 (Sekhar et al) provides a method of applying refractory hard metal boride to a carbon containing component of a cell for the production of aluminium.

The purpose of the longitudinal bevels 29 in the top end edges of the blocks 10 is to form a longitudinal channel perpendicular to the parallel V or U-shaped recessed grooves between bevels 20, for draining off the product aluminium to maintain the canals 40' of aluminium in the V or U-shaped grooves at a constant level. Such longitudinal channels can be formed in one or both ends of the blocks and, if required, one or more intermediate longitudinal channels can be formed by machining grooves across the blocks 10, intersecting with the V or U-shaped grooves formed by bevels 20.

These longitudinal channels, which extend along the cell, are connected to a reservoir of molten aluminium, possibly with a weir in order to set the level of the aluminium canals 40'. Operation is possible with a fluctuating level of the aluminium canals 40' or with a steady level.

Several anodes 15, conventionally blocks of prebaked carbon, are suspended in the cell by the usual mechanisms (not shown) enabling their height to be adjusted. Oxygen evolving non-carbon anodes may be suspended in the cell instead of the carbon anodes 15 but do not need to be vertically adjustable because they are non-consumable. The anodes 15 dip in the molten electrolyte 41 facing the channelled cathode surface 25. The anode-cathode gap is not shown to scale. In operation, the cryolite-based electrolyte 41 is usually at a temperature of about 950°C, but the invention applies also to components used in cells with electrolytes well below 900°C, and as low as 700°C.

## Claims

1. A cathode bottom of a cell for the electrowinning of aluminium from alumina, comprising a horizontal aluminium-wettable drained cathode surface having a series of parallel spaced apart recessed grooves extending across the cathode bottom for facilitating collection of product aluminium draining from the horizontal cathode surface, wherein the cathode bottom comprises a series of cathode blocks placed side-by-side along the cathode bottom, each block extending lengthwise across the cathode bottom, the cathode blocks having flat top surfaces that form said horizontal aluminium-wettable drained cathode surface and having cut-outs or bevels along opposite upper side edges that extend across the cathode bottom so that two cathode blocks placed side-by-side along their cut-outs or bevels form between them one of said recessed grooves across the cathode bottom.

2. The cathode bottom of claim 1, wherein said recessed grooves have a generally U-shaped or V-shaped cross-section.

3. The cathode bottom of claim 1 or 2, wherein the cathode blocks comprise at least one further recessed groove between and parallel to said recessed grooves across the cathode bottom.

4. The cathode bottom of any preceding claim, wherein said recessed grooves lead into at least one aluminium collection channel arranged longitudinally along the cathode bottom for draining off the molten aluminium.

5. The cathode bottom of claim 4, wherein the or at least one longitudinal aluminium collection channel is a deep central channel.

6. The cathode bottom of claim 4 or 5, wherein the or at least one longitudinal aluminium collection channel extends along a side of the cathode bottom.

7. The cathode bottom of claim 4, 5 or 6, wherein the cathode blocks have further cut-outs or bevels along top end edges to form the or at least one longitudinal aluminium collection channel.

8. The cathode bottom of any one of claims 4 to 7, wherein a plurality of said longitudinal aluminium collection channels run across the horizontal top surface of at least one of the cathode blocks.

9. The cathode bottom of any preceding claim, wherein each cathode block extends across substantially the entire cathode bottom.

10. The cathode bottom on any one of claims 1 to 8, wherein several cathode blocks arranged end-to-end extend across substantially the entire cathode bottom.

11. The cathode bottom of any preceding claim, wherein the cathode blocks are made of carbon.

12. The cathode bottom of any preceding claim, wherein the cathode blocks comprise an aluminium-wettable coating which forms the horizontal aluminium-wettable drained cathode surface.

13. The cathode bottom of any preceding claim, wherein the cathode blocks are further provided with steel or other conductive bars for the delivery of current which extend generally parallel to one another across the cathode bottom.

14. A cathode block for the electrowinning of aluminium from alumina, comprising a flat aluminium-wettable top cathode surface for forming a horizontal aluminium-wettable drained cathode surface of a cathode bottom and cut-outs or bevels along opposite upper side edges so that two cathode blocks placed side-by-side in a cathode bottom along their cut-outs or bevels form between them a recessed groove for facilitating collection of product aluminium draining from the horizontal cathode surface.

15. A cathode bottom for the electrowinning of aluminium from alumina, comprising a plurality of cathode blocks as defined in claim 14 placed side-by-side along their cut-outs or bevels so that the top cathode surfaces of the side-by-side blocks form a horizontal aluminium-wettable drained cathode surface and the cut-outs or bevels of the cathode blocks form recessed groove(s) between the cathode blocks.

16. A cell for the electrowinning of aluminium from alumina, comprising a cathode bottom as defined in any one of claims 1 to 13 and 15.

17. The cell of claim 16, which comprises dimensionally stable anodes.

18. The cell of claim 16, which comprises carbon anodes.

19. A method of producing aluminium comprising passing an electrolysis current in a molten electrolyte containing dissolved alumina between an anode and a horizontal aluminium-wettable drained cathode surface of a cathode bottom as defined in any one of claims 1 to 13 and 15 to evolve gas on the anode and produce on the drained cathode surface molten aluminium which drains into the recessed grooves of the drained cathode surface.

## Patentansprüche

1. Kathodenboden von einer Zelle für die elektrolytische Gewinnung von Aluminium aus Aluminiumoxid, mit einer horizontalen, mit Aluminium benetzbaren, drainierten Kathodenfläche, die eine Reihe von parallel beabstandeten, ausgesparten Nuten aufweist, die quer zu dem Kathodenboden verlaufen, um so das Sammeln des hergestellten Aluminiums zu erleichtern, das von der horizontalen Kathodenfläche abläuft, wobei der Kathodenboden eine Reihe von Kathodenblöcken aufweist, die entlang des Kathodenbodens seitlich nebeneinander angeordnet sind, wobei sich jeder Block in Längsrichtung quer zu dem Kathodenbodens erstreckt, wobei die Kathodenblöcke flache obere Flächen, durch die die horizontale, mit Aluminium benetzbare, drainierte Kathodenfläche gebildet ist, sowie Ausschnitte oder Abschrägungen entlang gegenüberliegender oberer Seitenkanten haben, die sich quer zum Kathodenboden erstrecken, so dass zwei Kathodenblöcke, die seitlich nebeneinander angeordnet sind, entlang ihrer Ausschnitte oder Abschrägungen zwischen sich eine der ausgesparten Nuten quer zum Kathodenboden bilden.

2. Kathodenboden nach Anspruch 1, bei dem die ausgesparten Nuten einen im wesentlichen U-förmigen oder V-förmigen Querschnitt haben.

3. Kathodenboden nach Anspruch 1 oder 2, bei dem die Kathodenblöcke zumindest eine weitere ausgesparte Nut zwischen und parallel zu den ausgesparten Nuten quer zum Kathodenboden aufweisen.

4. Kathodenboden nach einem der vorhergehenden Ansprüche, bei dem die ausgesparten Nuten in zumindest einem Aluminiumsammelkanal führen, der in Längsrichtung entlang des Kathodenbodens ausgebildet ist, um geschmolzenes Aluminium abzuleiten.

5. Kathodenboden nach Anspruch 4, bei dem der oder zumindest ein in Längsrichtung verlaufender Aluminiumsammelkanal ein mittlerer tiefer Kanal ist.

6. Kathodenboden nach Anspruch 4 oder 5, bei dem sich der oder zumindest ein in Längsrichtung verlaufender Aluminiumsammelkanal entlang einer Seite des Kathodenbodens erstreckt.

7. Kathodenboden nach Anspruch 4, 5 oder 6, bei dem die Kathodenblöcke weitere Ausschnitte oder Abschrägungen entlang oberer Endkanten haben, um den oder zumindest einen in Längsrichtung verlaufenden Aluminiumsammelkanal zu bilden.

8. Kathodenboden nach einem der Ansprüche 4 bis 7, bei dem eine Vielzahl der in Längsrichtung verlaufenden Aluminiumsammelkanäle quer zu der horizontalen oberen Fläche von zumindest einem der Kathodenblöcke verläuft.

9. Kathodenboden nach einem der vorhergehenden Ansprüche, bei dem sich jeder Kathodenblock im wesentlichen über den gesamten Kathodenboden erstreckt.

10. Kathodenboden nach einem der Ansprüche 1 bis 8, bei dem mehrere Kathodenblöcke, die Ende an Ende angeordnet sind, im wesentlichen quer zum gesamten Kathodenboden verlaufen.

11. Kathodenboden nach einem der vorhergehenden Ansprüche, bei dem die Kathodenblöcke aus Kohlenstoff hergestellt sind.

12. Kathodenboden nach einem der vorhergehenden Ansprüche, bei dem die Kathodenblöcke eine mit Aluminium benetzbare Beschichtung aufweisen, durch die die horizontale, mit Aluminium benetzbare, drainierte Kathodenfläche gebildet ist.

13. Kathodenboden nach einem der vorhergehenden Ansprüche, bei dem die Kathodenblöcke außerdem mit Stahlstangen oder anderen leitfähigen Stangen versehen sind, um Strom zuzuführen, die sich im wesentlichen parallel zueinander quer zum Kathodenboden erstrecken.

14. Kathodenblock für die elektrolytische Gewinnung von Aluminium aus Aluminiumoxid, der eine flache, mit Aluminium benetzbare obere Kathodenfläche, um eine horizontale, mit Aluminium benetzbare, drainierte Kathodenfläche von einem Kathodenboden zu bilden, und Ausschnitte oder Abschrägungen entlang gegenüberliegender oberer Seitenkanten aufweist, so dass zwei Kathodenblöcke, die in einem Kathodenboden seitlich nebeneinander angeordnet sind, entlang ihrer Ausschnitte oder Abschrägungen zwischen sich eine ausgesparte Nut bilden, um das Sammeln des erzeugtes Aluminiums zu erleichtern, das von der horizontalen Kathodenfläche abläuft.

15. Kathodenblock für die elektrolytische Gewinnung von Aluminium aus Aluminiumoxid, mit einer Vielzahl von Kathodenblöcken nach Anspruch 14, die entlang ihrer Ausschnitte oder Abschrägungen seitlich nebeneinander angeordnet sind, so dass die oberen Kathodenflächen der seitlich nebeneinander angeordneten Blöcke eine horizontale, mit Aluminium benetzbare, drainierte Kathodenfläche bilden und die Ausschnitte oder Abschrägungen der Kathodenblöcke eine ausgesparte Nut bzw. ausgesparte Nuten zwischen den Kathodenblöcken bilden.

16. Zelle für die elektrolytische Gewinnung von Aluminium aus Aluminiumoxid, mit einer Kathodenboden nach einem der Ansprüche 1 bis 13 und 15.

17. Zelle nach Anspruch 16, die abmessungstabile Anoden aufweist.

18. Zelle nach Anspruch 16, die Kohlenstoffanoden aufweist.

19. Verfahren zum Herstellen von Aluminium, mit dem Leiten von einem Elektrolysestrom durch einen geschmolzenen Elektrolyten, der gelöstes Aluminiumoxid enthält, zwischen einer Anode und einer horizontalen, mit Aluminium benetzbaren, drainierten Kathodenfläche von einem Kathodenboden nach einem der Ansprüche 1 bis 13 und 15, um an der Anode Gas zu erzeugen und um an der drainierten Kathodenfläche geschmolzenes Aluminium herzustellen, das in die ausgesparten Nuten der drainierten Kathodenfläche abläuft.

## Revendications

1. Fond de cathode d'une cuve pour l'électro-obtention d'aluminium à partir d'alumine, comprenant une surface de cathode drainée mouillable par l'aluminium horizontale ayant une série de rainures évidées espacées parallèles s'étendant à travers le fond de cathode pour faciliter la collecte de l'aluminium produit drainé à partir de la surface de cathode horizontale, où le fond de cathode comprend une série de blocs de cathode placés côte à côte le long du fond de cathode, chaque bloc s'étendant longitudinalement à travers le fond de cathode, les blocs de cathode présentant des surfaces supérieures plates qui forment ladite surface de cathode drainée mouillable par l'aluminium horizontale et ayant des découpes ou chanfreins le long de bords latéraux supérieurs opposés qui s'étendent à travers le fond de cathode, de sorte que deux blocs de cathode placés côte à côte le long de leurs découpes ou chanfreins forment entre eux une desdites rainures évidées à travers le fond de cathode.

2. Fond de cathode selon la revendication 1, dans lequel lesdites rainures évidées présentent une section transversale généralement en forme de U ou en forme de V.

3. Fond de cathode selon la revendication 1 ou 2, dans lequel les blocs de cathode comprennent au moins une autre rainure évidée entre et parallèle auxdites rainures évidées à travers le fond de cathode.

4. Fond de cathode selon une quelconque revendication précédente, dans lequel lesdites rainures évidées mènent dans au moins un canal de collecte d'aluminium agencé longitudinalement le long du fond de cathode pour drainer l'aluminium fondu.

5. Fond de cathode selon la revendication 4, dans lequel le ou au moins un canal de collecte d'aluminium longitudinal est un canal central profond.

6. Fond de cathode selon la revendication 4 ou 5, dans lequel le ou au moins un canal de collecte d'aluminium longitudinal s'étend le long d'un côté du fond de cathode.

7. Fond de cathode selon la revendication 4, 5 ou 6, dans lequel les blocs de cathode présentent d'autres découpes ou chanfreins le long de bords d'extrémité supérieurs pour former le ou au moins un canal de collecte d'aluminium longitudinal.

8. Fond de cathode selon une quelconque des revendications 4 à 7, dans lequel une pluralité desdits canaux de collecte d'aluminium longitudinaux s'étendent à travers la surface supérieure horizontale d'au moins un des blocs de cathode.

9. Fond de cathode selon une quelconque revendication précédente, dans lequel chaque bloc de cathode s'étend à travers sensiblement tout le fond de cathode.

10. Fond de cathode selon une quelconque des revendications 1 à 8, dans lequel plusieurs blocs de cathode agencés bout à bout s'étendent à travers sensiblement tout le fond de cathode.

11. Fond de cathode selon une quelconque revendication précédente, dans lequel les blocs de cathode sont réalisés en carbone.

12. Fond de cathode selon une quelconque revendication précédente, dans lequel les blocs de cathode comprennent un revêtement mouillable par l'aluminium qui forme la surface de cathode drainée mouillable par l'aluminium horizontale.

13. Fond de cathode selon une quelconque revendication précédente, dans lequel les blocs de cathode sont munis de plus de barres en acier ou d'autres barres conductrices pour la distribution du courant, qui s'étendent généralement parallèlement l'une à l'autre à travers le fond de cathode.

14. Bloc de cathode pour l'électro-obtention d'aluminium à partir d'alumine, comprenant une surface de cathode supérieure mouillable par l'aluminium plate pour former une surface de cathode drainée mouillable par l'aluminium horizontale d'un fond de cathode et des découpes ou chanfreins le long de bords latéraux supérieurs opposés, de sorte que deux blocs de cathode placés côte à côte dans un fond de cathode le long de leurs découpes ou chanfreins forment entre eux une rainure évidée pour faciliter la collecte de l'aluminium produit drainé à partir de la surface de cathode horizontale.

15. Fond de cathode pour l'électro-obtention d'aluminium à partir d'alumine, comprenant une pluralité de blocs de cathode comme défini dans la revendication 14, placés côte à côte le long de leurs découpes ou chanfreins, de sorte que les surfaces de cathode supérieures des blocs côte à côte forment une surface de cathode drainée mouillable par l'aluminium horizontale, et les découpes ou chanfreins des blocs de cathode forment une ou des rainures évidées entre les blocs de cathode.

16. Cuve pour l'électro-obtention d'aluminium à partir d'alumine, comprenant un fond de cathode comme défini dans l'une quelconque des revendications 1 à 13 et 15.

17. Cuve selon la revendication 16, qui comprend des anodes dimensionnellement stables.

18. Cuve selon la revendication 16, qui comprend des anodes en carbone.

19. Procédé pour produire de l'aluminium, comprenant : faire passer un courant d'électrolyse dans un électrolyte fondu contenant de l'alumine dissoute entre une anode et une surface de cathode drainée mouillable par l'aluminium horizontale d'un fond de cathode comme défini dans l'une quelconque des revendications 1 à 13 et 15 pour émettre du gaz sur l'anode et produire, sur la surface de cathode drainée, de l'aluminium fondu qui est drainé dans les rainures évidées de la surface de cathode drainée.
